# FASCICULE DE BREVET EUROPEEN

(11) **EP 3 152 008 B1**
(45) Date de publication et mention de la délivrance du brevet: **25.07.2018**
(21) Numéro de dépôt: 15728800.2
(22) Date de dépôt: 03.06.2015
(51) Int. Cl.: B25J 9/10, B62D 57/032, B25J 19/06

(54) **SÉCURITÉ D'UN ROBOT À CARACTÈRE HUMANOÏDE**
SICHERHEIT EINES HUMANOIDEN ROBOTERS
SAFETY OF A HUMANOID-TYPE ROBOT

(30) Priorité: 03.06.2014 FR 1455027
(43) Date de publication de la demande: 12.04.2017
(73) Titulaire: Softbank Robotics Europe, 75015 Paris (FR)
(72) Inventeur: CLERC, Vincent, F-92140 Clamart (FR)
(74) Mandataire: Collet, Alain
(86) Numéro de dépôt international: PCT/EP2015/062458
(87) Numéro de publication internationale: WO 2015/185670

(56) Documents cités:
- JP-A- 2004 309 917
- JP-A- 2012 006 087
- US-A1- 2002 062 179
- US-A1- 2004 060 746
- US-A1- 2004 236 469

## Description

L'invention concerne la sécurité d'utilisation d'un robot à caractère humanoïde.

Un robot peut être qualifié d'humanoïde à partir du moment où il possède certains attributs de l'apparence et des fonctionnalités de l'homme comme par exemple une tête, un tronc, deux bras, deux mains, deux jambes ou deux pieds. Certains robots ne possédant que le haut du corps peuvent également être considérés comme possédant des caractères humanoïdes. On trouve des robots humanoïdes capables de marcher ou de se déplacer sur une plateforme munie de roues, de faire des gestes, avec les membres ou avec la tête. La complexité des gestes qu'ils sont capables d'effectuer augmente sans cesse. Malgré ces progrès, les robots humanoïdes restent susceptibles de chuter. Ces chutes peuvent avoir lieu lors des essais de mise au point du robot, mais également dans une phase ultérieure d'utilisation du robot, en raison des inévitables obstacles ou interventions extérieures. Les robots peuvent également recevoir des chocs soit du fait de leurs propres mouvements soit du fait d'éléments extérieurs animés.

Lors des chutes ou des chocs, un robot peut perdre la maîtrise de ses mouvements et causer des dommages à son entourage.

Le document US-A-2002/062179 décrit un robot humanoïde selon le préambule de la revendication 1, possédant un système anti pincement. Le document US-A-2004/060746 décrit un autre robot humanoïde possédant des détecteurs de chocs permettant de détecter des chutes. En cas de chute ou de choc, ces robots restent actifs et peuvent toujours causer des dommages à leur entourage.

L'invention vise à pallier ce problème au moyen d'un dispositif permettant un arrêt urgence du robot.

A cet effet, l'invention a pour objet un robot à caractère humanoïde comprenant deux éléments et une articulation à au moins un degré de liberté reliant les deux éléments, l'articulation permettant un débattement dans une plage donnée en fonctionnement opérationnel, un premier des deux éléments étant destiné à venir au contact d'une butée appartenant à un second des deux éléments en extrémité de la plage, caractérisé en ce qu'il comprend en outre au moins un interrupteur configuré pour actionner un contact électrique lorsqu'un effort exercé par le premier élément contre la butée dépasse un effort donné.

L'interrupteur peut être situé dans la butée ou au voisinage de celle-ci.

Les deux éléments et l'articulation peuvent être configurés pour déformer au moins l'un des deux éléments ou l'articulation sous l'action de l'effort dépassant l'effort donné, la déformation actionnant le contact électrique.

Le contact électrique est avantageusement mis en oeuvre dans un dispositif d'arrêt d'urgence qui peut être actionné par le robot lui-même du fait de ses propres mouvements, en cas de choc ou de chute, ou qui peut être actionné par un opérateur extérieur souhaitant mettre le robot hors service par exemple après avoir constaté des mouvements intempestifs du robot. Autrement dit, la butée et son interrupteur forment un bouton d'arrêt d'urgence du robot et le robot comprend avantageusement des moyens d'alimentation électrique. Le contact électrique est alors configuré pour désactiver les moyens d'alimentation électrique lors de l'actionnement du contact électrique.

Avantageusement, la butée est souple et le contact électrique est actionné par une déformation de la butée. La butée peut posséder une raideur caractérisant sa souplesse, la raideur de la butée étant calibrée pour obtenir l'actionnement du contact électrique pour un effort donné exercé sur la butée.

Dans un mode de réalisation le robot comprend une membrane souple formant une peau du second élément, l'interrupteur étant disposé à l'intérieur du second élément sous la peau. La butée peut comprendre une entretoise prenant appui d'une part sur une partie mobile de l'interrupteur et d'autre part sur la membrane souple.

L'interrupteur comprend une partie mobile et une partie fixe (29) fixée à une structure porteuse du second élément. L'interrupteur (23) forme avantageusement un bouton poussoir manoeuvré par déplacement de la partie mobile en translation selon un axe par rapport à la partie fixe.

Dans un mode de réalisation privilégié, le premier des deux éléments forme une tête du robot et le second des deux éléments forme un tronc du robot.

Selon une variante de ce mode privilégié, le robot est configuré pour que tout effort de la tête sur le tronc, effort dépassant un effort donné selon tout axe de rotation dans un plan horizontal du robot, actionne le contact électrique de l'interrupteur. La butée peut comprendre une collerette s'étendant autour d'un axe vertical du robot, la collerette assurant la transmission de l'effort de la tête contre la butée vers l'interrupteur.

Selon une autre variante de ce mode privilégié, la butée est disposée dans un plan sagittal du robot et le contact électrique est disposé de façon à être actionné lors d'un mouvement de rotation de la tête par rapport au tronc autour d'un axe sensiblement perpendiculaire au plan sagittal.

L'invention sera mieux comprise et d'autres avantages apparaîtront à la lecture de la description détaillée d'un mode de réalisation donné à titre d'exemple, description illustrée par le dessin joint dans lequel :
les figures 1a et 1b représentent deux exemples de robots pouvant mettre en oeuvre l'invention ;
la figure 2 représente en coupe dans un plan sagittal la tête et le tronc du robot de la figure 1b ;
la figure 3 représente en coupe partielle, dans le plan sagittal du robot de la figure 1b, une partie du tronc ;
les figures 4, 5 et 6 représentent le robot de la figure 1b dans différentes positions lors de la manoeuvre d'un bouton d'arrêt d'urgence.
Par souci de clarté, les mêmes éléments porteront les mêmes repères dans les différentes figures.

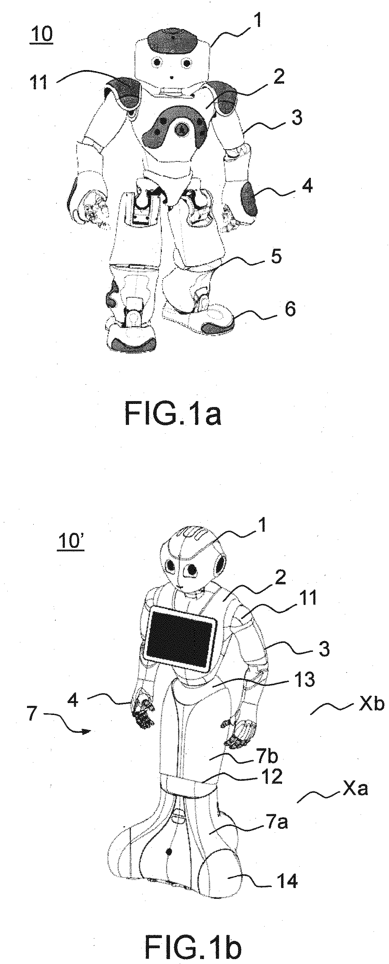

Les figures 1a et 1b représentent deux exemples de robots à caractères humanoïdes développés par la société ALDEBARAN ROBOTICS™. Le robot humanoïde 10 représenté en figure 1a comprend une tête 1, un tronc 2, deux bras 3, deux mains 4, deux jambes 5 et deux pieds 6. Le robot humanoïde 10' représenté en figure 1b comprend une tête 1, un tronc 2, deux bras 3, deux mains 4 et une jupe 7. Ces deux robots comprennent plusieurs articulations autorisant le mouvement relatif des différents membres du robot dans le but de reproduire la morphologie humaine et ses mouvements. Les robots 10 et 10' comprennent par exemple une articulation 11 entre le tronc 2 et chacun des bras 3. L'articulation 11 formant une épaule du robot est motorisée autour de deux axes de rotation pour permettre de déplacer le bras 3 par rapport au tronc 2 à la manière des déplacements possibles par une épaule d'un être humain.

Le robot à caractères humanoïdes 10 comprend également plusieurs articulations pour mettre en mouvement les jambes du robot et reproduire le mouvement de la marche, en particulier des articulations assimilables à une hanche, entre le tronc et chacune des cuisses, à un genou, entre une cuisse et la jambe, et à une cheville entre la jambe et le pied. Plusieurs formes d'articulations motorisées sont mises en oeuvre, entrainant en mouvement l'un des membres selon un ou plusieurs degrés de liberté en rotation.

Le robot à caractères humanoïdes 10' présente une architecture différente. Pour améliorer la stabilité et abaisser le centre de gravité du robot, le robot ne comprend pas de jambe mais une jupe 7 comprenant en sa base un tripode 14 capable de déplacer le robot. La jupe 7 comprend aussi une première articulation 12 s'apparentant à un genou, entre une jambe 7a et une cuisse 7b. Une deuxième articulation 13 s'apparentant à une hanche est relie le tronc 2 et la cuisse 7b. Ces deux articulations 12 et 13 sont des liaisons pivots motorisées autour d'un axe de rotation. L'axe de rotation Xa de l'articulation 12 et l'axe de rotation Xb de l'articulation 13 sont sensiblement parallèles à un axe reliant les deux épaules du robot, permettant d'incliner le robot vers l'avant ou vers l'arrière.

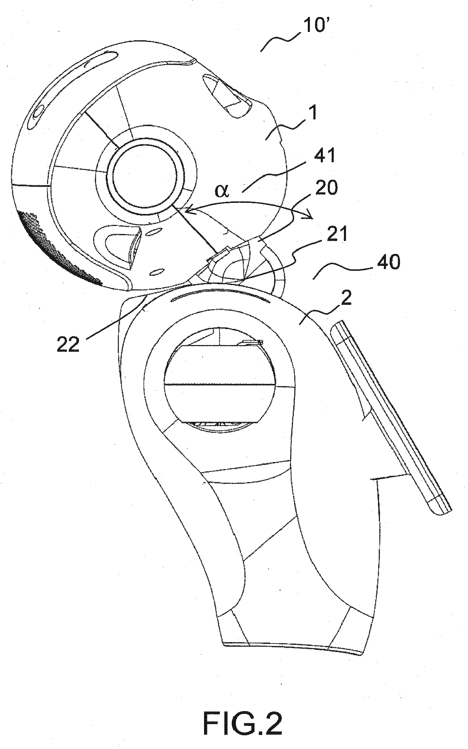

La figure 2 représente en coupe dans un plan sagittal la tête 1 et le tronc 2 du robot 10' de la figure 1b. La tête 1 et le tronc 2 sont reliés par un cou 20 formant une articulation à trois degrés de liberté en rotation. Pour la présente invention, nous nous intéressons à la rotation que permet le cou 20 autour d'un axe 21 perpendiculaire au plan sagittal du robot c'est-à-dire perpendiculairement au plan de la figure 2. Le cou 20 permet une rotation de la tête 1 par rapport au tronc 2 dans une plage angulaire α donnée, lors du fonctionnement opérationnel du robot 10'. Sur la figure 2, la tête 1 est au voisinage d'une des extrémités de la plage angulaire a. La tête 1 est quasiment au contact d'une butée 22 appartenant au tronc 2. Autrement dit, le visage du robot 10' est relevé et la tête 1 est sensiblement en appui sur le haut du dos du robot 10'.

La rotation de la tête 1 peut être obtenue au moyen d'un actionneur permettant de motoriser l'articulation du cou 20 ou du fait d'une action extérieure, par exemple lorsqu'un effort extérieur est exercé sur la tête 1 ou lors d'un mouvement rapide de la tête 1 entrainant celle-ci par inertie. Dans un fonctionnement normal ou opérationnel du robot 10' la tête 1 se déplace par rapport au tronc 2 à l'intérieur de la plage angulaire a. Lors de ce fonctionnement opérationnel, la tête 1 peut venir en appui contre la butée 22 sans exercer sur la butée 22 un effort dépassant un effort de valeur donnée. Autrement dit, si la tête 1 vient à exercer sur le tronc 2 un effort supérieur à l'effort donné, on considère alors que le robot n'est plus dans sont fonctionnement opérationnel. La sortie du cadre du fonctionnement opérationnel peut être du à un choc exercé sur le robot 10' entrainant la tête dans un mouvement brusque qui, par inertie, entraine la tête 1 contre le tronc 2. Ce choc peut être encaissé par le tronc 2 ou directement par la tête. La sortie du fonctionnement opérationnel peut être du à un défaut de fonctionnement de l'actionneur de l'articulation du cou 20. Toute autre cause peut être envisagée. Un des buts de l'invention est de permettre la détection de la sortie du fonctionnement opérationnel lorsqu'un effort trop important est exercé par la tête 1 sur le tronc 2. Il est bien entendu possible de détecter la sortie du fonctionnement opérationnel du à un effort intempestif de tout élément mobile du robot par rapport à un autre élément du robot. Dans l'exemple représenté, la plage est une plage angulaire. Il est possible de mettre en oeuvre l'invention entre deux éléments du robot mobiles en translation l'un par rapport à l'autre. La plage peut être linéaire ou peut même s'étendre selon toute courbe suivie relativement par les deux éléments mobiles du robot.

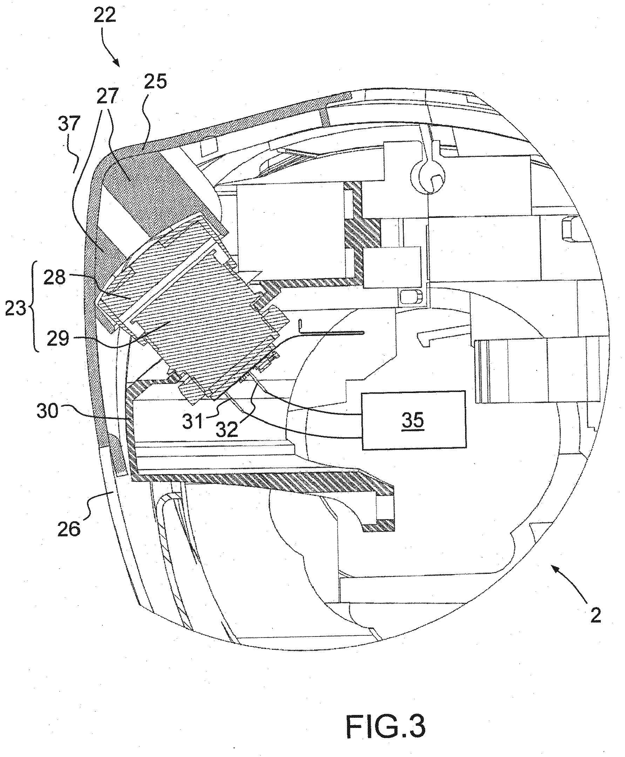

La figure 3 représente en coupe partielle dans le plan sagittal du robot 10' une partie du tronc 2, partie dans laquelle on retrouve la butée 22.

Selon l'invention, pour détecter le dépassement d'un effort donné exercé dur la butée 22, le robot comprend un contact électrique actionné en cas de dépassement de l'effort donné. Un exemple de réalisation de ce contact électrique est représenté sur la figure 2. Dans cet exemple, la butée 22 est souple et le contact électrique est formé dans un interrupteur 23 actionné par la déformation de la butée 22. La butée 22 possède une raideur caractérisant sa souplesse. Plus précisément, la raideur peut être définie par un coefficient de proportionnalité reliant un effort exercé sur la butée 22 et la déformation de la butée 22. Ce coefficient peut être peut être constant ou non en fonction de l'effort. Ce coefficient est fonction de la nature du ou des matériaux choisis pour réaliser la butée, notamment du module d'Young du matériau et des dimensions du matériau. La raideur de la butée 22 est calibrée pour obtenir l'actionnement de l'interrupteur pour un effort donné exercé sur la butée 22.

Il est possible d'intégrer à la butée 22 un élément ressort permettant de calibrer l'effort donné. Cet élément ressort peut être disposé dans l'interrupteur 23. Dans l'exemple représente, la butée 22 comprend une membrane souple 25 formant une partie de la peau du tronc 2. La membrane 25 est par exemple réalisée à base de caoutchouc ou de silicone. La membrane 25 peut venir dans la continuité d'une autre partie rigide 26 de la peau du tronc 2. L'interrupteur 23 peut être placé directement sous la membrane 25 ou à distance comme représenté sur la figure 3. La butée 22 comprend alors une entretoise 27 prenant appui d'une part sur une partie mobile 28 de l'interrupteur 23 et d'autre part sur la membrane 25. L'entretoise 27 est mise en forme pour s'appuyer sur la membrane 25 selon une forme souhaitée pour la peau et pour s'appuyer sur la partie mobile 28 de l'interrupteur 23.

L'interrupteur 23 comprend une partie fixe 29 fixée sur une structure porteuse 30 du tronc 2. La partie fixe 29 comprend deux languettes 31 et 32 permettant le raccordement électrique de l'interrupteur 23. Un effort exercé sur la butée 22 est transmis à l'interrupteur 23 par l'intermédiaire de l'entretoise 27 et met en contact électrique les deux languettes 31 et 32. Alternativement un effort exercé sur l'interrupteur 23 peut ouvrir un contact normalement fermé en fonctionnement opérationnel.

Dans l'exemple représenté sur la figure 3, l'interrupteur 23 est disposé dans la butée 22. Alternativement, il est possible de disposer l'interrupteur hors de la butée 22 à proximité de celle-ci. On peut ainsi dissocier la fonction d'interrupteur et la fonction de définition de l'effort donné (que l'on doit dépasser pour actionner l'interrupteur) assuré par la butée elle-même.

Selon une autre variante il est possible de définir l'effort donné à dépasser au moyen d'autres éléments que la butée. On peut par exemple conserver une butée rigide et autoriser une déformation des différents composants reliant les deux éléments 1 et 2 du robot. Il est par exemple possible de disposer la butée dans l'articulation 22. Autrement dit, on autorise une déformation d'au moins un composant de la chaîne cinématique reliant les deux éléments 1 et 2. Cette déformation est obtenue sous l'effet d'un effort supérieur à l'effort donné. Au moins un des composants formés par les éléments 1 et 2 eux-mêmes et l'articulation 20 est configuré pour permettre la déformation souhaitée. Cette déformation est avantageusement réalisée dans un domaine élastique afin d'être réversible.

Le robot 10' comprend des moyens d'alimentation électrique 35. Avantageusement, le contact électrique manoeuvré par l'interrupteur 23 est configuré pour désactiver les moyens d'alimentation électrique 35 lors de l'actionnement du contact électrique. De façon plus générale, l'interrupteur 23 forme un bouton d'arrêt d'urgence du robot 10'.

L'interrupteur 23 est par exemple formé par un bouton poussoir manoeuvré par déplacement de la partie mobile 28 en translation selon un axe 37 par rapport à la partie fixe 29. L'effort exercé sur la butée 22 et permettant d'actionner l'interrupteur 23 peut être produit suivant l'axe 37 ou incliné par rapport à cet axe. En cas d'inclinaison c'est la projection de l'effort sur l'axe 37 qui actionne l'interrupteur 23. L'effort donné de calibration de la butée 22 est un effort dont la direction est portée par l'axe 37. Il est donc nécessaire de tenir compte de cette projection.

L'effort exercé par la tête 1 sur la butée 22 peut être orienté suivant l'axe 37. Ceci permet une manoeuvre directe de l'interrupteur 23 sans aucune projection de l'effort exercé sur la butée 22, perpendiculairement à l'axe 37. Alternativement, il est possible d'incliner l'axe 37 par rapport à la direction de l'effort exercé par la tête 1 afin de faciliter d'autres types de manoeuvre de l'interrupteur 23, par exemple effectuée par un opérateur susceptible de manoeuvrer l'interrupteur 23 en cas d'urgence.

Le robot 10' est à caractère humanoïde et l'actionnement de l'interrupteur 23 peut être assimilé à un traumatisme du rachis cervical. Ce traumatisme peut être indirect, c'est-à-dire dû à un mouvement inapproprié de la tête 1, soit direct, c'est-à-dire dû à un coup porté sur le haut du torse 2 du robot 10'. Ce type de traumatisme est communément appelé : « coup du lapin » par analogie à une méthode utilisée pour tuer un lapin. Il s'agit d'un coup direct opéré derrière la nuque du lapin. Ce coup produit un traumatisme en hyper extension de la tête entrainant une fracture ou une luxation du rachis cervical entraînant des troubles neurologiques et la mort par lésion du bulbe rachidien. L'interrupteur 23 est manoeuvré hors du fonctionnement opérationnel du robot et peut à ce titre être assimilé à un traumatisme involontaire ou volontairement porté au robot 10' et destiné à l'arrêter rapidement, par exemple en coupant son alimentation électrique. L'interrupteur 23 peut être à simple ou double position stable.

Dans le cas d'un interrupteur 23 à une seule position stable, une simple impulsion sur la butée 22 suffit à commander l'arrêt d'urgence du robot 10'. L'interrupteur peut alors commander un relais bistable appartenant aux moyens d'alimentation électrique 35. Des moyens de réarmement de l'alimentation électrique du robot 10' sont alors prévu dans les moyens d'alimentation électrique 35. La commande de réarmement peut être disposée à distance de la butée 22.

Dans le cas d'un interrupteur 23 à deux positions stables le passage d'une position stable à l'autre commande directement la coupure d'alimentation électrique du robot 10'. Le réarmement de l'alimentation électrique se fait alors directement par l'interrupteur 23 en revenant à la première position stable. Cette manoeuvre de réarmement peut être réalisée au moyen d'une manipulation particulière réalisée au travers de la membrane 25.

La figure 3 illustre l'actionnement de l'interrupteur 23 au moyen d'un mouvement de rotation de la tête 1 par rapport au tronc 2 autour d'un axe 21 sensiblement perpendiculaire au plan sagittal du robot 10'. Il est tout à fait possible de prévoir le déclenchement de l'interrupteur 23 pour une rotation excessive de la tête 1 par rapport au tronc 2 autour d'un axe de rotation horizontal contenu dans le plan sagittal. A cet effet, l'entretoise 27 peut avoir une forme de collerette entourant le cou 20. De façon plus générale, tout effort de la tête 1 sur le tronc 2, effort dépassant un effort donné, selon tout axe de rotation dans un plan horizontal 40 du robot 10' entraine alors l'actionnement du contact électrique de l'interrupteur 23.

Pour faciliter l'obtention d'une information électrique en cas d'effort excessif, il est possible de prévoir plusieurs interrupteurs 23 disposés sous la collerette 27. Le déclenchement d'au moins un des interrupteurs 23 entrainant l'arrêt d'urgence du robot 10'. La collerette 27 peut être réalisée sous forme d'un anneau monobloc ou de plusieurs segments angulaires associés chacun à un des interrupteurs 23. L'anneau monobloc ou les différents segments angulaires et plus généralement la collerette 27 s'étendent autour d'un axe vertical 41 du robot 10'. L'axe vertical 41 est contenu dans le plan sagittal et est perpendiculaire au plan horizontal 40. La collerette 27 peut être disposée sous la membrane 25 ou peut former elle-même une partie de la peau du tronc 2. La collerette 27 assure la transmission de l'effort de la tête 1 contre la butée 22 vers la partie mobile 28 du ou des interrupteurs 23.

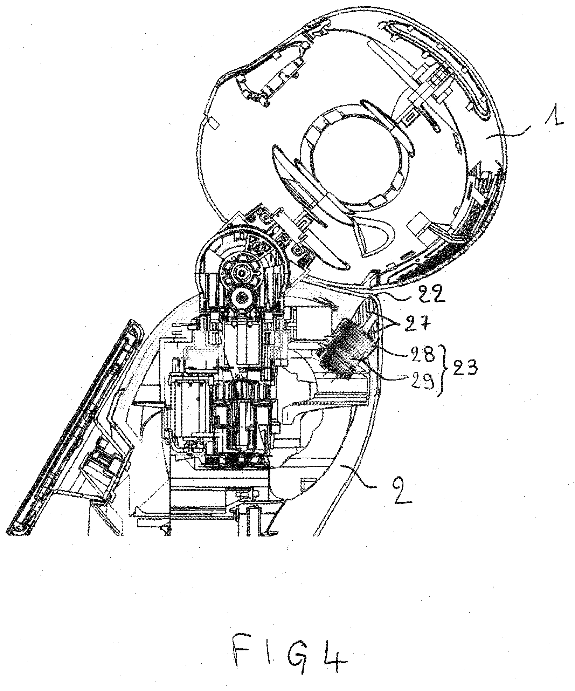

La figure 4 représente en coupe partielle le robot 10' dans son plan sagittal. Dans cette position la tête 1 et le tronc 2 sont en appui l'un contre l'autre sur la butée 22. La figure 4 montre le robot en fonctionnement opérationnel. La tête 1 est positionnée à l'une des extrémités de la plage angulaire a.

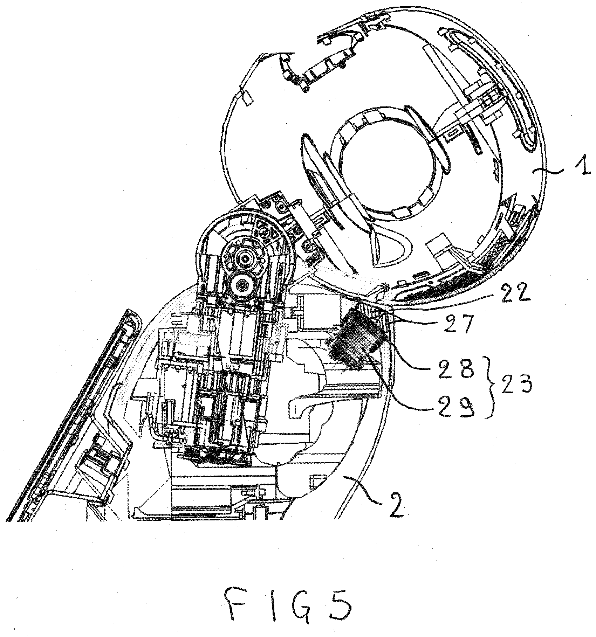

La figure 5 représente toujours en coupe partielle le robot 10' dans son plan sagittal. Dans la position de cette figure, le robot a subi une action extérieure entrainant un effort de la tête 1 sur la butée 22 supérieur à la valeur donnée. Cette action peut par exemple être un coup sur la tête 1, un choc sur une autre partie du robot entrainant la tête 1 par inertie contre la butée 22. Dans la position représentée sur la figure 5, la collerette 27 se déforme. Sa déformation n'est pas encore transmise à l'interrupteur 23.

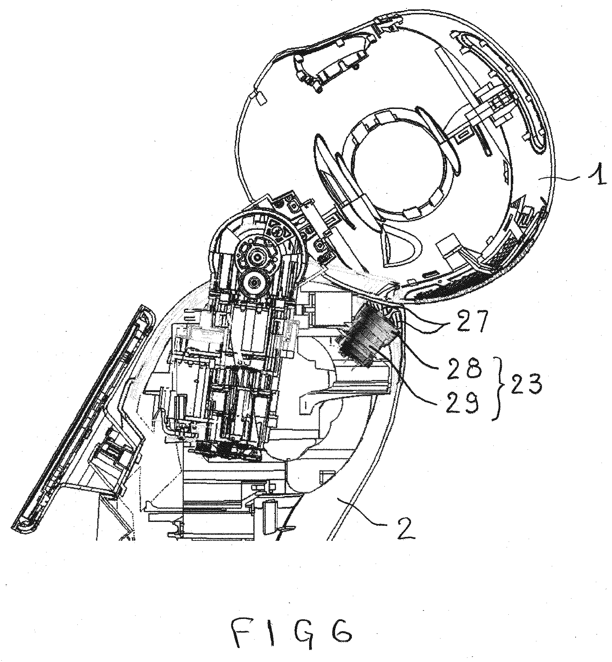

La figure 6 montre la transmission de l'effort de la collerette 27 vers l'interrupteur dont la partie mobile 28 se déplace pour manoeuvrer l'interrupteur 23. La durée séparant les positions des figures 5 et 6, peut être de l'ordre de quelques millisecondes, le temps nécessaire à l'onde de choc pour se propager dans la collerette 27.

## Revendications

1. Robot à caractère humanoïde (10 ; 10') comprenant deux éléments (1, 2) et une articulation (20) à au moins un degré de liberté reliant les deux éléments (1, 2), l'articulation (20) permettant un débattement dans une plage donnée (a) en fonctionnement opérationnel, un premier (1) des deux éléments étant destiné à venir au contact d'une butée (22) appartenant à un second (2) des deux éléments en extrémité de la plage (a), **caractérisé en ce qu'**il comprend en outre au moins un interrupteur (23) configuré pour actionner un contact électrique lorsqu'un effort exercé par le premier élément (1) contre la butée (22) dépasse un effort donné.

2. Dispositif selon la revendication 1, **caractérisé en ce que** l'interrupteur (23) est situé dans la butée (22).

3. Robot selon l'une des revendications 1 ou 2, **caractérisé en ce que** les deux éléments (1, 2) et l'articulation (20) sont configurés pour déformer au moins l'un des deux éléments (1, 2) ou l'articulation (20) sous l'action de l'effort dépassant l'effort donné, la déformation actionnant le contact électrique.

4. Dispositif selon l'une des revendications 1 ou 2, **caractérisé en ce que** la butée (22) est souple et le contact électrique est actionné par une déformation de la butée (22).

5. Robot selon la revendication 4, **caractérisé en ce que** la butée (22) possède une raideur caractérisant sa souplesse et **en ce que** la raideur de la butée (22) est calibrée pour obtenir l'actionnement du contact électrique (23) pour un effort donné exercé sur la butée (22).

6. Robot selon l'une quelconque des revendications 1 à 4, **caractérisé en ce qu'**il comprend une membrane souple (25) formant une peau du second élément (2), l'interrupteur (23) étant disposé à l'intérieur du second élément (2) sous la peau (25).

7. Robot selon la revendication 6, **caractérisé en ce que** la butée (22) comprend une entretoise (27) prenant appui d'une part sur une partie mobile (28) de l'interrupteur (23) et d'autre part sur la membrane souple (25).

8. Robot selon l'une des revendications précédentes, **caractérisé en ce que** l'interrupteur (23) comprend une partie mobile (28) et une partie fixe (29) fixée à une structure porteuse (30) du second élément (2) et **en ce que** l'interrupteur (23) forme un bouton poussoir manoeuvré par déplacement de la partie mobile (28) en translation selon un axe (37) par rapport à la partie fixe (29).

9. Robot selon l'une des revendications précédentes, **caractérisé en ce que** l'interrupteur (23) forme un bouton d'arrêt d'urgence du robot (10 ; 10').

10. Robot selon la revendication 9, **caractérisé en ce qu'**il comprend des moyens d'alimentation électrique (35) et **en ce que** le contact électrique (23) est configuré pour désactiver les moyens d'alimentation électrique (35) lors de l'actionnement du contact électrique (23).

11. Robot selon l'une des revendications précédentes, **caractérisé en ce que** le premier des deux éléments forme une tête (1) du robot (10 ; 10') et le second des deux éléments forme un tronc (2) du robot (10 ; 10').

12. Robot selon la revendication 11, **caractérisé en ce qu'**il est configuré pour que tout effort de la tête (1) sur le tronc (2), effort dépassant un effort donné selon tout axe de rotation dans un plan horizontal du robot (10 ; 10'), actionne le contact électrique de l'interrupteur (23).

13. Robot selon la revendication 12, **caractérisé en ce que** la butée (22) comprend une collerette (27) s'étendant autour d'un axe vertical (41) du robot (10'), la collerette (27) assurant la transmission de l'effort de la tête (1) contre la butée (22) vers l'interrupteur (23).

14. Robot selon la revendication 12, **caractérisé en ce que** la butée (22) est disposée dans un plan sagittal du robot (10') et **en ce que** le contact électrique (23) est disposé de façon à être actionné lors d'un mouvement de rotation de la tête (1) par rapport au tronc (2) autour d'un axe (21) sensiblement perpendiculaire au plan sagittal.

## Patentansprüche

1. Roboter mit humanoidem Charakter (10; 10'), der zwei Elemente (1, 2) und ein die beiden Elemente (1, 2) verbindendes Gelenk (20) mit wenigstens einem Freiheitsgrad umfasst, wobei das Gelenk (20) einen Spielraum in einem gegebenen Betriebsbereich (a) zulässt, wobei ein erstes (1) der beiden Elemente zum Inkontaktkommen mit einem Widerlager (22) bestimmt ist, das zu einem zweiten (2) der beiden Elemente am Ende des Bereichs (a) gehört, **dadurch gekennzeichnet, dass** es ferner wenigstens einen Unterbrecher (23) umfasst, konfiguriert zum Betätigen eines elektrischen Kontakts, wenn eine vom ersten Element (1) auf das Widerlager (22) ausgeübte Kraft eine gegebene Kraft übersteigt.

2. Vorrichtung nach Anspruch 1, **dadurch gekennzeichnet, dass** sich der Unterbrecher (23) in dem Widerlager (22) befindet.

3. Roboter nach Anspruch 1 oder 2, **dadurch gekennzeichnet, dass** die beiden Elemente (1, 2) und das Gelenk (20) zum Verformen wenigstens eines der beiden Elemente (1, 2) oder des Gelenks (20) unter der Wirkung der die gegebene Kraft übersteigenden Kraft konfiguriert sind, wobei durch die Verformung der elektrische Kontakt betätigt wird.

4. Vorrichtung nach Anspruch 1 oder 2, **dadurch gekennzeichnet, dass** das Widerlager (22) elastisch ist und der elektrische Kontakt durch eine Verformung des Widerlagers (22) betätigt wird.

5. Roboter nach Anspruch 4, **dadurch gekennzeichnet, dass** das Widerlager (22) eine Steifigkeit besitzt, die die Elastizität charakterisiert, und dadurch, dass die Steifigkeit des Widerlagers (22) kalibriert wird, um die Betätigung des elektrischen Kontakts (23) für eine auf das Widerlager (22) ausgeübte gegebene Kraft zu erzielen.

6. Roboter nach einem der Ansprüche 1 bis 4, **dadurch gekennzeichnet, dass** er eine elastische Membran (25) aufweist, die eine Haut des zweiten Elements (2) bildet, wobei der Unterbrecher (23) im Innern des zweiten Elements (2) unter der Haut (25) angeordnet ist.

7. Roboter nach Anspruch 6, **dadurch gekennzeichnet, dass** das Widerlager (22) ein Distanzstück (27) umfasst, das einerseits an einem beweglichen Teil (28) des Unterbrechers (23) und andererseits an der elastischen Membran (25) zur Anlage kommt.

8. Roboter nach einem der vorherigen Ansprüche, **dadurch gekennzeichnet, dass** der Unterbrecher (23) einen beweglichen Teil (28) und einen festen Teil (29) umfasst, der an einer Tragstruktur (30) des zweiten Elements (2) befestigt ist, und dadurch, dass der Unterbrecher (23) einen Drucktastenschalter bildet, der durch translationales Bewegen des beweglichen Teils (28) entlang einer Achse (37) mit Bezug auf den festen Teil (29) manövriert wird.

9. Roboter nach einem der vorherigen Ansprüche, **dadurch gekennzeichnet, dass** der Unterbrecher (23) einen Notausschalter des Roboters (10; 10') bildet.

10. Roboter nach Anspruch 9, **dadurch gekennzeichnet, dass** er Stromversorgungsmittel (35) umfasst, und dadurch, dass der elektrische Kontakt (23) zum Deaktivieren der Stromversorgungsmittel (35) bei der Betätigung des elektrischen Kontakts (23) konfiguriert ist.

11. Roboter nach einem der vorherigen Ansprüche, **dadurch gekennzeichnet, dass** das erste der beiden Elemente einen Kopf (1) des Roboters (10; 10') bildet und das zweite der beiden Elemente einen Rumpf (2) des Roboters (10; 10') bildet.

12. Roboter nach Anspruch 11, **dadurch gekennzeichnet, dass** er so konfiguriert ist, dass jede Kraft des Kopfs (1) auf dem Rumpf (2), die eine gegebene Kraft entlang der Rotationsachse in einer horizontalen Ebene des Roboters (10; 10') übersteigt, den elektrischen Kontakt des Unterbrechers (23) betätigt.

13. Roboter nach Anspruch 12, **dadurch gekennzeichnet, dass** das Widerlager (22) einen Kragen (27) umfasst, der um eine vertikale Achse (41) des Roboters (10') verläuft, wobei der Kragen (27) die Übertragung der Kraft des Kopfs (1) auf das Widerlager (22) zum Unterbrecher (23) gewährleistet.

14. Roboter nach Anspruch 12, **dadurch gekennzeichnet, dass** das Widerlager (22) in einer Sagittalebene des Roboters (10') angeordnet ist, und dadurch, dass der elektrische Kontakt (23) so angeordnet ist, dass er bei einer Drehbewegung des Kopfs (1) in Bezug auf den Rumpf (2) um eine Achse (21) im Wesentlichen lotrecht zur Sagittalebene betätigt wird.

## Claims

1. A humanoid-type robot (10; 10') comprising two elements (1, 2) and an articulation (20) with at least one degree of freedom linking the two elements (1, 2), the articulation (20) allowing a travel in a given range (a) in operational operation, a first (1) of the two elements being intended to come into contact with an abutment (22) belonging to a second (2) of the two elements at the end of the range (a), **characterized in that** it further comprises at least one switch (23) configured to actuate an electrical contact when a force exerted by the first element (1) against the abutment (22) exceeds a given force.

2. The device as claimed in claim 1, **characterized in that** the switch (23) is situated in the abutment (22).

3. The robot as claimed in one of claims 1 or 2, **characterized in that** the two elements (1, 2) and the articulation (20) are configured to deform at least one of the two elements (1, 2) or the articulation (20) under the action of the force exceeding the given force, the deformation actuating the electrical contact.

4. The device as claimed in one of claims 1 or 2, **characterized in that** the abutment (22) is flexible and the electrical contact is actuated by a deformation of the abutment (22).

5. The robot as claimed in claim 4, **characterized in that** the abutment (22) has a stiffness characterizing its flexibility and **in that** the stiffness of the abutment (22) is gauged to obtain the actuation of the electrical contact (23) for a given force exerted on the abutment (22).

6. The robot as claimed in any one of claims 1 to 4, **characterized in that** it comprises a flexible membrane (25) forming a skin of the second element (2), the switch (23) being arranged inside the second element (2) under the skin (25).

7. The robot as claimed in claim 6, **characterized in that** the abutment (22) comprises a spacer (27) bearing on the one hand on a mobile part (28) of the switch (23) and on the other hand on the flexible membrane (25).

8. The robot as claimed in one of the preceding claims, **characterized in that** the switch (23) comprises a mobile part (28) and a fixed part (29) fixed to a supporting structure (30) of the second element (2) and **in that** the switch (23) forms a pushbutton operated by displacement of the mobile part (28) in translation along an axis (37) relative to the fixed part (29).

9. The robot as claimed in one of the preceding claims, **characterized in that** the switch (23) forms an emergency stop button of the robot (10; 10').

10. The robot as claimed in claim 9, **characterized in that** it comprises electrical power supply means (35) and **in that** the electrical contact (23) is configured to deactivate the electrical power supply means (35) upon the actuation of the electrical contact (23).

11. The robot as claimed in one of the preceding claims, **characterized in that** the first of the two elements forms a head (1) of the robot (10; 10') and the second of the two elements forms a trunk (2) of the robot (10; 10').

12. The robot as claimed in claim 11, **characterized in that** it is configured so that any force of the head (1) on the trunk (2) exceeding a given force according to any axis of rotation in a horizontal plane of the robot (10; 10'), actuates the electrical contact of the switch (23).

13. The robot as claimed in claim 12, **characterized in that** the abutment (22) comprises a flange ring (27) extending around a vertical axis (41) of the robot (10'), the flange ring (27) ensuring the transmission of the force of the head (1) against the abutment (22) to the switch (23).

14. The robot as claimed in claim 12, **characterized in that** the abutment (22) is arranged in a sagittal plane of the robot (10') and **in that** the electrical contact (23) is arranged so as to be actuated upon a rotational movement of the head (1) relative to the trunk (2) about an axis (21) substantially at right angles to the sagittal plane.
